# EUROPEAN PATENT SPECIFICATION

(11) **EP 4 245 047 B1**
(45) Date of publication and mention of the grant of the patent: **26.03.2025**
(21) Application number: 21918617.8
(22) Date of filing: 15.01.2021
(51) Int. Cl.: H04W 4/90

(54) **DISASTER CONDITION INDICATION OF SERVING PLMN**
KATASTROPHENZUSTANDSANZEIGE DER VERSORGUNG VON PLMN
INDICATION DE CONDITION DE CATASTROPHE D'UN PLMN DE DESSERTE

(43) Date of publication of application: 20.09.2023
(73) Proprietor: Huawei Technologies Co., Ltd., Shenzhen, Guangdong 518129 (CN)
(72) Inventor: PREMAN, Vishnu, 22369 Lund (CH); MOPIDEVI, Rama Kumar, 22369 Lund (CH); CHEN, Gong, Shenzhen, Guangdong 518129 (CN); SUN, Xibo, Shenzhen, Guangdong 518129 (CN); CUI, Jianhai, Shenzhen, Guangdong 518129 (CN); YANG, Linping, Shenzhen, Guangdong 518129 (CN)
(74) Representative: Gill Jennings & Every LLP
(86) International application number: PCT/CN2021/072297
(87) International publication number: WO 2022/151413

(56) References cited:
- WO-A1-2020/141964
- WO-A1-2020/141964
- WO-A1-2020/141965
- WO-A1-2020/218764
- WO-A1-2021/007447
- WO-A1-2021/007447
- ERICSSON: "MINT: alternative 2 for How are other PLMNs (= not subject to the disaster) notified that a "Disaster Condition" applies / no longer applies?", 3GPP TSG-CT WG1 MEETING #126-E; C1-207325, 3RD GENERATION PARTNERSHIP PROJECT (3GPP), SOPHIA-ANTIPOLIS CEDEX ; FRANCE, 6 November 2020 (2020-11-06), Electronic meeting; 20201015 - 20201023, XP051951865

## Description

### Technical Field

Embodiments of the invention relates to a network node and a client device for disaster condition indication of a serving Public Land Mobile Network, PLMN, in a communication system. Furthermore, the invention also relates to corresponding methods and a computer program.

### Background

During a disaster cellular networks often get overloaded or become unavailable and users may therefore be denied services. Disasters can be man-made such as e.g. a fire in a building or natural such as e.g. an earth quake. When a disaster happens, a lot of people may try to call emergency services or each other. Due to multiple users requesting services at the same time, the network resources can get congested and users may not be able to get the requested services. Network failure can also happen during a disaster thereby the network becoming unavailable.

WO 2021/007447 A1 discloses a method for network reselection during a disaster. WO 2020/141964 A1 discloses a method for a terminal and a base station to register in a network in a wireless communication system.

### Summary

An objective of embodiments of the invention is to provide a solution which mitigates or solves the drawbacks and problems of conventional solutions.

Another objective of embodiments of the invention is to provide a disaster condition indication mechanism for communication systems.

The above and further objectives are solved by the subject matter of the independent claims. Further advantageous embodiments of the invention can be found in the dependent claims.

### Brief Description of the Drawings

The appended drawings are intended to clarify and explain different embodiments of the invention, in which:
- Fig. 1 shows a network node according to an embodiment of the invention;
- Fig. 2 illustrates control signalling from a network node to a client device;
- Fig. 3 shows a method for a network node according to an embodiment of the invention;
- Fig. 4 shows a client device according to an embodiment of the invention;
- Fig. 5 illustrates control signalling from first and second network nodes to a client device;
- Fig. 6 shows a method for a network access node according to an embodiment of the invention;
- Fig. 7 illustrates embodiments when an indication about a disaster condition is carried or comprised in SIB;
- Fig. 8 and 9 illustrate embodiments when an indication about a disaster condition is provided in NAS signalling;
- Fig. 10 and 11 illustrate embodiments when an indication about a disaster condition is provided in RRC messages; and
- Fig. 12 illustrate embodiments when information about a disaster condition is provided in a paging procedure.

### Detailed Description

If a Public Land Mobile Network (PLMN) is not able to provide services such as e.g. voice calls or mobile data services to a User Equipment (UE) due to a disaster condition, there are often other PLMNs available in the area which may be able to provide service to the UE. However, those PLMNs could be configured to be forbidden PLMNs in the UE and the UE will hence never select one of those PLMNs.

To minimization service interruptions, it would be beneficial to enable a UE of a given PLMN to obtain service from another PLMN for an area where a disaster condition applies, even if the other PLMN is a forbidden PLMN for the UE under normal conditions. PLMN selection is a procedure which enables the UE to select the most appropriate PLMN at a particular point of time. Most of the time when the UE is in the home country, the home PLMN will be the most appropriate PLMN and the home PLMN will thus be the serving PLMN. To prevent the UE from switching from the home PLMN, roaming is often disabled inside the home country. Other PLMNs in the home country may e.g. be added to a list of forbidden PLMNs so that the UE does not roam unnecessarily into these PLMNs.

Embodiments of the invention provides a disaster condition indication mechanism for communication systems thereby informing client devices, such as UEs, that a serving PLMN is in disaster condition. Thereby, the client devices may take appropriate measures e.g. initiate a PLMN selection procedure.

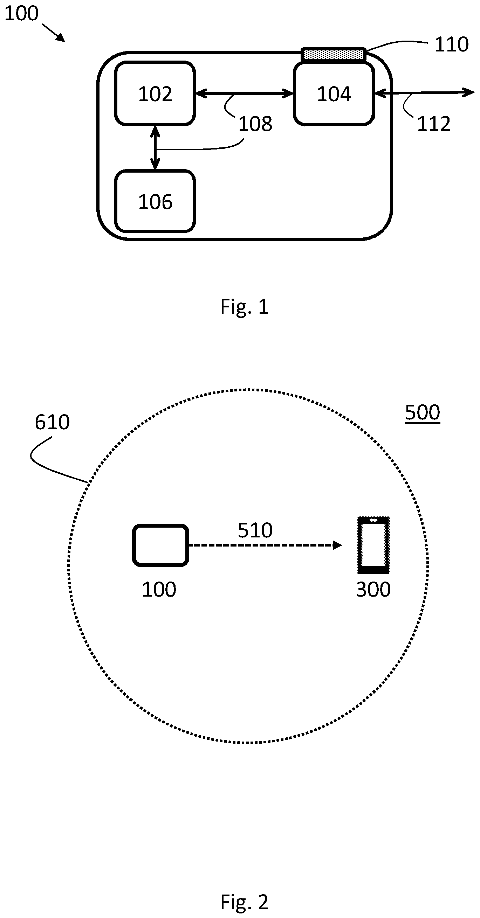

Fig. 1 shows a network node 100 according to an embodiment of the invention. In the embodiment shown in Fig. 1, the network node 100 comprises a processor 102, a transceiver 104 and a memory 106. The processor 102 may be coupled to the transceiver 104 and the memory 106 by communication means 108 known in the art. The network node 100 may further comprise an antenna or antenna array 110 coupled to the transceiver 104, which means that the network node 100 may be configured for wireless communications in a wireless communication system. That the network node 100 may be configured to perform certain actions can in this disclosure be understood to mean that the network node 100 comprises suitable means, such as e.g. the processor 102 and the transceiver 104, configured to perform said actions.

The processor 102 of the network node 100 may be referred to as one or more general-purpose central processing units (CPUs), one or more digital signal processors (DSPs), one or more application-specific integrated circuits (ASICs), one or more field programmable gate arrays (FPGAs), one or more programmable logic devices, one or more discrete gates, one or more transistor logic devices, one or more discrete hardware components, and one or more chipsets. The memory 106 of the network node 100 may be a read-only memory, a random access memory, or a non-volatile random access memory (NVRAM).

The transceiver 104 of the network node 100 may be a transceiver circuit, a power controller, an antenna, or an interface which communicates with other modules or devices. In embodiments, the transceiver 104 of the network node 100 may be a separate chipset or being integrated with the processor 102 in one chipset. While in some embodiments, the processor 102, the transceiver 104, and the memory 106 of the network node 100 are integrated in one chipset.

With reference to Fig. 1 and 2, according to embodiments of the invention, the network node 100 is associated with a serving PLMN 610 for a first client device 300. The network node 100 is configured to: transmit a first control message 510 to the first client device 300 upon determining that the serving PLMN 610 for the first client device 300 is in a disaster condition. The first control message 510 indicates that the serving PLMN 610 for the first client device 300 is in the disaster condition.

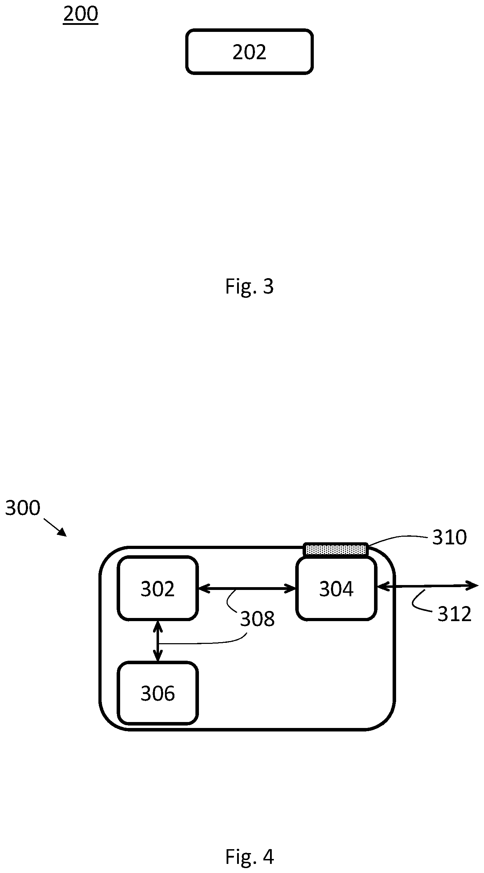

Fig. 3 shows a flow chart of a corresponding method 200 which may be executed in a network node 100, such as the one shown in Fig. 1. The method 200 for a network node 100 being associated with a serving PLMN 610 for a first client device 300 comprises: transmitting 202 a first control message 510 to the first client device 300 upon determining that the serving PLMN 610 for the first client device 300 is in a disaster condition. The first control message 510 indicates that the serving PLMN 610 for the first client device 300 is in the disaster condition.

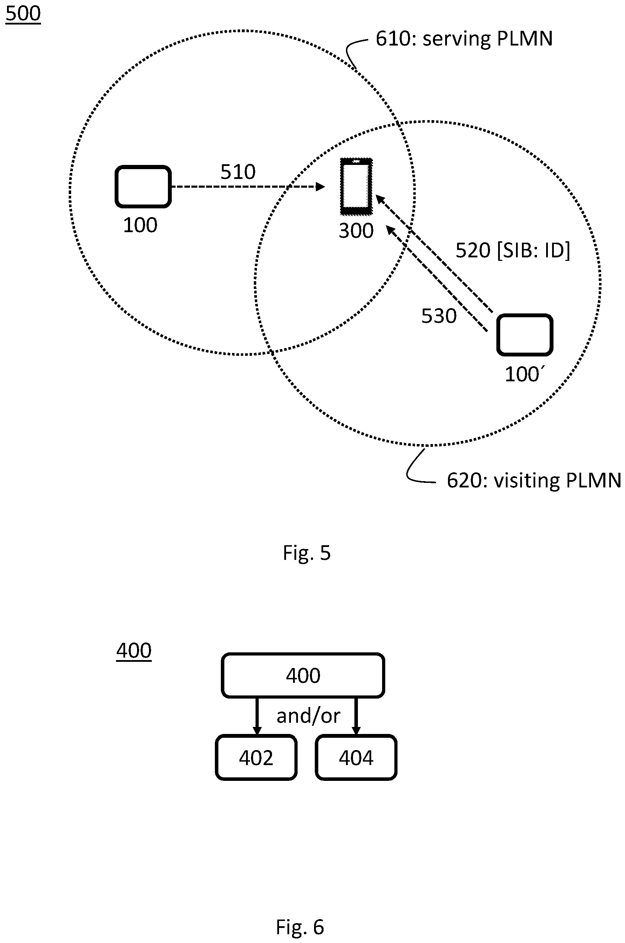

In the previous embodiments of the invention, the network node 100 is associated with the serving PLMN for a client device. That may be understood to mean that the network node 100 is part of the serving PLMN, e.g. a base station of a RAN or a function of a core network. However, the present solution may also involve the case when the network node 100 is not associated with the serving PLMN for a client device. Therefore, in embodiments of the invention the network node 100 is further configured to transmit a second control message 520 to a client device upon determining that a serving PLMN for the second client device is in a disaster condition. The second control message 520 indicates that the serving PLMN for the client device is in the disaster condition. This is also illustrated in Fig. 5 in which the network node denoted 100' transmits the second control message 520 to a client device. Thereby, the client device may be informed about the disaster condition of its serving PLMN even when its serving PLMN is down. In such cases the network node 100 may be a network access node of a RAN, and the second control message 520 may be a SIB. In embodiments of the invention, the second control message 520 may also indicate the Identity (ID) of the serving PLMN so that the client device easily can identity the serving PLMN.

Fig. 4 shows a client device 300 according to an embodiment of the invention. In the embodiment shown in Fig. 4, the client device 300 comprises a processor 302, a transceiver 304 and a memory 306. The processor 302 is coupled to the transceiver 304 and the memory 306 by communication means 308 known in the art. The client device 300 may be configured for both wireless and wired communications in wireless and wired communication systems, respectively. The wireless communication capability is provided with an antenna or antenna array 310 coupled to the transceiver 304, while the wired communication capability is provided with a wired communication interface 312 coupled to the transceiver 304. That the client device 300 is configured to perform certain actions can in this disclosure be understood to mean that the client device 300 comprises suitable means, such as e.g. the processor 302 and the transceiver 304, configured to perform said actions.

The processor 302 of the client device 300 may be referred to as one or more general-purpose CPUs, one or more DSPs, one or more ASICs, one or more FPGAs, one or more programmable logic devices, one or more discrete gates, one or more transistor logic devices, one or more discrete hardware components, and one or more chipsets. The memory 306 of the client device 300 may be a read-only memory, a random access memory, or a NVRAM.

The transceiver 304 of the client device 300 may be a transceiver circuit, a power controller, an antenna, or an interface which communicates with other modules or devices. In embodiments, the transceiver 304 of the client device 300 may be a separate chipset or being integrated with the processor 302 in one chipset. While in some embodiments, the processor 302, the transceiver 304, and the memory 306 of the client device 300 are integrated in one chipset.

With reference to Fig. 4 and 5, according to embodiments of the invention, the client device 300 which is configured to be served by a serving PLMN 610 is further configured to receive a first control message 510 from a first network node 100 associated with the serving PLMN 610 for the client device 300, wherein the first control message 510 indicates that the serving PLMN 610 is in the disaster condition; and/or receive a second control message 520 from a second network node 100' associated with a visiting PLMN 620 for the client device 300, wherein the second control message 520 indicates that the serving PLMN 610 is in the disaster condition.

In embodiments of the invention, the second network node 100' may be a network access node of a RAN, and the second control message 520 is a SIB broadcasted by the second network node 100'.

It is noted that the client device 300 may receive the first control message 510 only; receive the second control message 520 only; or receive both the first control message 510 and the second control message 520.

Fig. 6 shows a flow chart of a corresponding method 400 which may be executed in a client device 300, such as the one shown in Fig. 4. The client device 300 is configured to be served by a serving PLMN 610. The method 400 comprises: receiving 402 a first control message 510 from a first network node 100 associated with the serving PLMN 610 for the client device 300, wherein the first control message 510 indicates that the serving PLMN 610 is in the disaster condition; and/or receiving 404 a second control message 520 from a second network node 100' associated with a visiting PLMN 620 for the client device 300, wherein the second control message 520 indicates that the serving PLMN 610 is in the disaster condition.

When the client device 300 is informed or aware that the serving PLMN 610 is in the disaster condition the client device 300 may try to register to another PLMN that is not in disaster condition. Thereby, service interruption for the client device 300 is avoided or shortened. Therefore, in embodiments of the invention, the client device 300 is configured to obtain a PLMN list comprising one or more visiting PLMNs. The client device 300 is further configured to register at a visiting PLMN in the PLMN list upon receiving the first control message 510 from the first network node 100 or the second control message 520 from the second network node 100'.

There are a number of different ways for the client device 300 to obtain the PLMN list. Non-limiting examples may be any of:
- obtaining the PLMN list from a control message indicating the PLMN list transmitted by a network node. The control message may be part of a Non-Access Stratum (NAS) protocol and may e.g. be: a configuration update command message, a registration accept message, a registration reject message, a service accept message, a service reject message, and a deregistration request message;
- obtaining the PLMN list from a Subscriber Identity Module (SIM) configuration of the client device; and
- obtaining the PLMN list from a Mobile Equipment (ME) configuration of the client device.

In embodiments of the invention, the PLMN list comprises an identity of each PLMN in the PLMN list so that the PLMNs can be identified by the client device/UE.

For registration synchronization and resource control in the communication system 500 the first control message 510 and/or the second control message 520 may further indicate at least one timer T defining a start register time instance at the visiting PLMN 620 for the first client device 300 and/or a re-registration time instance at the serving PLMN 610 for the first client device 300. The timer defining a start register time instance may also be understood as a timer defining a minimum wait time to start registration at the visiting PLMN. The timer defining a re-registration time instance may also be understood as a timer defining a minimum wait time to start re-registration at the previously served PLMN which was under disaster condition.

In the following disclosure further exemplary implementation cases of the present solution will be described. The present mechanism for disaster condition indication may be realized using different types of control signalling and involving one or more communication procedures. These implementation cases are fully or partially set in a 3GPP context hence the terminology and system architecture herein used but embodiments of the invention are not limited thereto. Furthermore, a network node may determine that the serving PLMN is in disaster condition in a number of different ways which is out of the scope of the present disclosure. However, it may be mentioned that the network node 100 or the network may be informed by a government agency, an operator, etc.

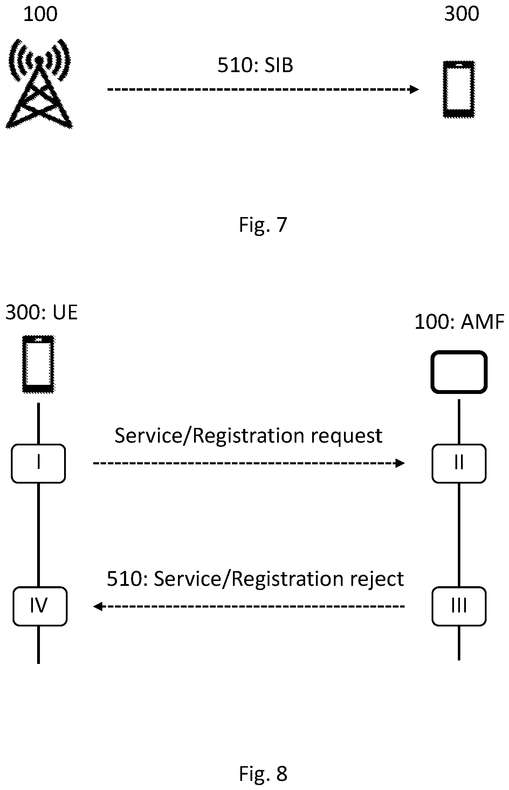

Fig. 7 illustrates when an indication about a disaster condition is carried or comprised in system information of the serving PLMN. When a UE (corresponding to a client device) is served by a PLMN in disaster condition and the serving PLMN goes into a disaster condition, the serving PLMN in disaster condition broadcasts an indication in system information that the serving PLMN is in disaster condition. Hence, a new indication in SIB may be broadcasted as the first control message 510 by a network access node 100 of a RAN to one or more UEs (however only one UE is illustrated in Fig. 7). The network access node 100 may e.g. be a gNB of the serving PLMN.

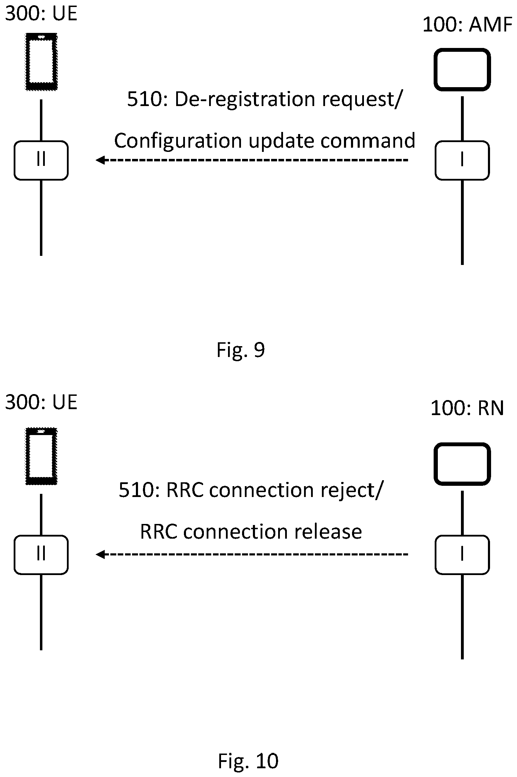

Furthermore, Fig. 8 and 9 illustrate cases when an indication about a disaster condition is provided in Non-Access Stratum (NAS) signalling. In such embodiments the network node 100 may be an Access and Mobility management Function (AMF) of a core network.

For a service request procedure, in step I in Fig. 8, a UE is served by a PLMN in disaster condition and the UE performs a service request by transmitting a service request message to an AMF associated with the serving PLMN for the UE. In step II in Fig 8, the service request is rejected by the AMF as the serving PLMN is already in disaster condition, and in step III in Fig 8, the AMF rejects the service request by sending a service reject message as the first control message 510 indicating that the serving PLMN is in the disaster condition to the UE. The service reject message may in this respect comprise a new cause value indicating that the serving PLMN is in the disaster condition. In step IV in Fig. 8, the UE receives the service reject message from the AMF and may e.g. perform a PLMN selection procedure in search of a PLMN not in disaster condition. In this respect a PLMN list comprising one or more visiting PLMNs may be used.

Correspondingly, for a registration request procedure, in step I in Fig. 8, the UE is served by a PLMN in disaster condition and performs a registration request by sending a registration request message to the AMF. In step II in Fig. 8, the registration request is rejected by the AMF since the serving PLMNB is in disaster condition, and in step III the AMF sends a registration reject message as the first control message 510 to the UE rejecting the registration request. The registration reject message may comprises a new cause value indicating that the serving PLMN is in the disaster condition. In step IV in Fig. 8, the UE as previously described may perform a PLMN selection procedure upon reception of the registration reject message.

In Fig. 9, an AMF initiates a de-registration procedure by sending a de-registration request message with a new cause value to re-direct a UE to another PLMN not in disaster condition. Therefore, in Step I in Fig. 9, the serving PLMN in disaster condition via AMF performs a de-registration request by sending a de-registration request message as the first control message 510 to the UE. The de-registration request message may comprise a new cause value indicating that the serving PLMN is in disaster condition.

The network may also initiate a configuration update command procedure by sending a configuration update command message with a new indication to the UE that the serving PLMN is in disaster condition and the UE needs to move to another PLMN not in disaster condition. Therefore, in Step I in Fig. 9, the serving PLMN in disaster condition via the AMF performs a configuration update command procedure by sending a configuration update command message as the first control message 510 to the UE.

For both cases in step II in Fig. 9, the UE may upon reception of the de-registration request message or the configuration update command message initiate a PLMN selection procedure as previously described.

In a general case the UE may perform a NAS signalling procedure and gets no response from the serving PLMN, e.g. since there is no radio resources available. In such case the UE may perform a scan on neighbouring PLMNs to see if their SIBs indicate that the serving PLMN is in the disaster condition. This is more or less in line with the embodiment shown in Fig. 5 in which a second control message 520 is employed by visiting PLMNs to inform UEs that their serving PLMN is in disaster condition.

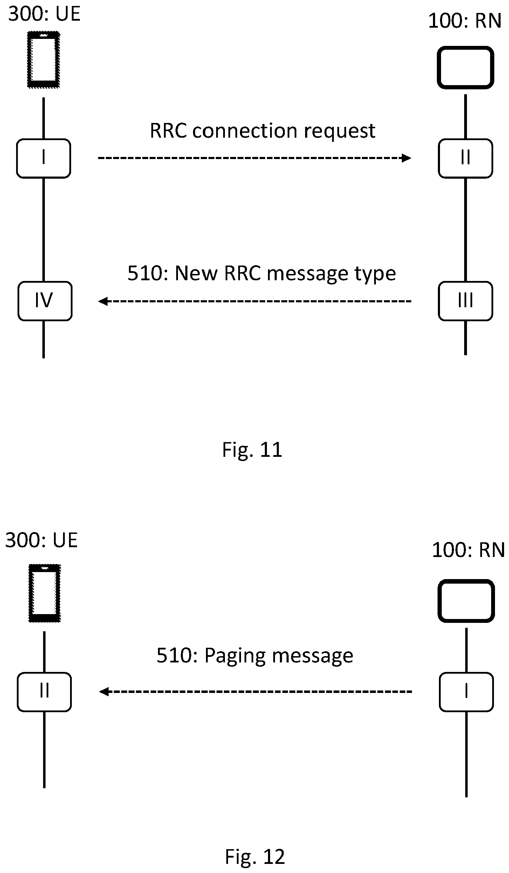

Moreover, Fig. 10 and 11 illustrate cases when an indication about a disaster condition is provided in RRC messages, e.g. by a RAN Node (denoted "RN" in Fig. 10) such as a gNB.

Fig. 10 illustrates two different cases using RRC messages for indicating disaster condition. Establishment of RRC connection is a first step for a UE to go to connected mode. NAS messages can only be transmitted after that the UE is in connected mode. Usually during a disaster, RAN resources get congested and the network can reject a RRC connection establishment message. So, by adding the present indication in RRC messages makes it possible for the network to inform about the disaster condition of the serving PLMN even if the RRC connection fails. Hence, a more robust control signalling is usually provided by the use of RRC signalling.

In a first case in Fig. 10, a RRC reject message with disaster indication and redirection information is employed. When a UE tries to establish or resume a RRC connection, the serving RAN node can reject the RRC connection and send a RRC connection reject message as the first control message 510 to the UE in step I in Fig. 10. The RRC connection reject message comprises an indication that the serving PLMN is in disaster condition and may further comprise redirecting information so as to redirect the UE to cells of other PLMNs not in disaster condition.

Therefore, in embodiments of the invention, the network node 100 may be configured to redirect the client device 300 from a serving PLMN 610 to a visiting PLMN 620 for a client device 300 upon determining that the serving PLMN 610 for the client device 300 is in a disaster condition. In this respect the previously mentioned PLMN list may be used for disaster condition PLMN selection. Also the previously mentioned timer(s) T may be used so that the client device is aware of when to register or re-register.

The visiting PLMN 620 may belong to a 3GPP or a non-3GPP system. Generally, there may be two different access systems, which means there are two ways for the UE to access the core network. One may be 3GPP which e.g. is GSM, WCDMA, LTE, NR and the other may be non-3GPP such as through a WiFi connection. So, the UE may move from a 3GPP system to a non-3GPP system, or vice versa.

In a second case in Fig. 10, a RRC release message may instead be employed. When the UE tries to resume a RRC connection, the serving RAN node can release the RRC connection and send a RRC connection release message as the first control message 510 to the UE in step I in Fig. 10. The RRC connection release message indicates that the serving PLMN is in disaster condition and may additionally indicate redirection information.

For both cases in Fig. 10, the UE may in step II upon reception of the RRC connection reject message or the RRC connection release message initiate a PLMN selection procedure as previously described.

Fig. 11 illustrates an embodiment when a new RRC message type is instead employed which e.g. may be labelled a RRC serving PLMN disaster condition message or any other suitable labelling. Hence, the serving RAN node may use the new RRC message type as a response message when the UE tries to establish or resume a RRC connection as shown in Fig. 11. In step I the UE transmits a RRC connection message to the serving RAN node. The RRC connection message is rejected by the serving RAN node in step II which transmits the new RRC message type to the UE as a reponse message in step III. Upon reception of the new RRC message type the UE may in step IV initiate a PLMN selection procedure. However, the new RRC message type may also be a stand alone message type and not a response message type as illustrated in Fig. 11. This implies that the UE does not have to transmit a request message. Thereby, by using the new RRC message type the UE is informed that the serving PLMN is in disaster condition and the UE may be redirected to cells belonging to one or more other PLMNs not in disaster condition.

Finally, Fig. 12 illustrate when information about a disaster condition is provided in a paging procedure. Generally, a UE performs a PLMN scan to find available PLMNs which means that the UE has to read the SIB which is broadcasted. The serving PLMN or the serving RAN node can page the UE to inform that the serving PLMN is in disaster condition. Therefore, the serving RAN node may transmit a paging message as the first control message 510 indicating that the serving PLMN is in disaster condition. The paging channel is monitored by all UEs and the paging message is received by all UEs so by using paging messages a plurality of UEs can be reached.

Moreover, embodiments of the invention also relates to a further mechanism in which a client device 300 is informed that a disaster condition is over for its serving PLMN.

From a network node point of view, the network node 100 may further be configured to transmit a third control message 530 to a client device 300 upon determining that a disaster condition for a serving PLMN for the client device 300 is over. Hence, the third control message 530 indicates that the disaster condition for the serving PLMN for the client device 300 is over. This is illustrated in Fig. 5 where a network node herein denoted second network node 100' transmits the third control message 530 to the client device 300.

From a client device 300point of view and with further reference to Fig. 5, the client device 300may further be configured to receive the third control message 530 from the second network node 100' associated with a visiting PLMN 620 for the client device 300. The third control message 530 indicates that the disaster condition is over for the serving PLMN 610. Thereby, the client device 300may try to re-register at the serving PLMN 610 after the disaster condition has ended.

The signalling of the third control message 530 may be performed with the same or corresponding methods as the ones used for the first control message 510 signalling. Therefore, the third control message 530 may be:
- a registration reject message, a de-registration request message, a configuration update command message, or a service reject message sent by a AMF;
- a paging message sent by a RAN node;
- a RRC connection reject message, a RRC connection release message, or a RRC serving PLMN disaster condition message sent by a RAN node;
- a SIB sent by a RAN node.

Embodiments of the invention may be implemented in different communication standards. For example, the present solution may impact 3GPP TS 24.501 and TS 23.122 - NAS. The proposed changes may impact NR RRC specs, such as and 38.331 respectively. For example, the sections for "System information acquisition", "RRC Connection Reject" and "RRC Connection Release". Further, a new Information Element (IE) can be added for "RRCReject" and "RRCRelease" messages. New 5G Mobility Management (5GMM) cause value to indicate disaster condition may e.g. be added to 3GPP TS 24.501 in Table 9.11.3.2.1 is herein exemplified in underlined bold face type denoted "Disaster Condition".

**Table 9.11.3.2.1: 5GMM cause information element**

| Cause value (octet 2) | | | | | | | | |
|---|---|---|---|---|---|---|---|---|
| Bits | | | | | | | | |
| **8** | **7** | **6** | **5** | **4** | **3** | **2** | **1** | |
| 0 | 0 | 0 | 0 | 0 | 0 | 1 | 1 | Illegal UE |
| 0 | 0 | 0 | 0 | 0 | 1 | 0 | 1 | PEI not accepted |
| 0 | 0 | 0 | 0 | 0 | 1 | 1 | 0 | Illegal ME |
| 0 | 0 | 0 | 0 | 0 | 1 | 1 | 1 | 5GS services not allowed |
| 0 | 0 | 0 | 0 | 1 | 0 | 0 | 1 | UE identity cannot be derived by the network |
| 0 | 0 | 0 | 0 | 1 | 0 | 1 | 0 | Implicitly de-registered |
| 0 | 0 | 0 | 0 | 1 | 0 | 1 | 1 | PLMN not allowed |
| 0 | 0 | 0 | 0 | 1 | 1 | 0 | 0 | Tracking area not allowed |
| 0 | 0 | 0 | 0 | 1 | 1 | 0 | 1 | Roaming not allowed in this tracking area |
| 0 | 0 | 0 | 0 | 1 | 1 | 1 | 1 | No suitable cells in tracking area |
| 0 | 0 | 0 | 1 | 0 | 1 | 0 | 0 | MAC failure |
| 0 | 0 | 0 | 1 | 0 | 1 | 0 | 1 | Synch failure |
| 0 | 0 | 0 | 1 | 0 | 1 | 1 | 0 | Congestion |
| 0 | 0 | 0 | 1 | 0 | 1 | 1 | 1 | UE security capabilities mismatch |
| 0 | 0 | 0 | 1 | 1 | 0 | 0 | 0 | Security mode rejected, unspecified |
| 0 | 0 | 0 | 1 | 1 | 0 | 1 | 0 | Non-5G authentication unacceptable |
| 0 | 0 | 0 | 1 | 1 | 0 | 1 | 1 | N1 mode not allowed |
| 0 | 0 | 0 | 1 | 1 | 1 | 0 | 0 | Restricted service area |
| 0 | 0 | 0 | 1 | 1 | 1 | 1 | 1 | Redirection to EPC required |
| 0 | 0 | 1 | 0 | 1 | 0 | 1 | 1 | LADN not available |
| 0 | 0 | 1 | 1 | 1 | 1 | 1 | 0 | No network slices available |
| 0 | 1 | 0 | 0 | 0 | 0 | 0 | 1 | Maximum number of PDU sessions reached |
| 0 | 1 | 0 | 0 | 0 | 0 | 1 | 1 | Insufficient resources for specific slice and DNN |
| 0 | 1 | 0 | 0 | 0 | 1 | 0 | 1 | Insufficient resources for specific slice |
| 0 | 1 | 0 | 0 | 0 | 1 | 1 | 1 | ngKSI already in use |
| 0 | 1 | 0 | 0 | 1 | 0 | 0 | 0 | Non-3GPP access to 5GCN not allowed |
| 0 | 1 | 0 | 0 | 1 | 0 | 0 | 1 | Serving network not authorized |
| 0 | 1 | 0 | 0 | 1 | 0 | 1 | 0 | Temporarily not authorized for this SNPN |
| 0 | 1 | 0 | 0 | 1 | 0 | 1 | 1 | Permanently not authorized for this SNPN |
| 0 | 1 | 0 | 0 | 1 | 1 | 0 | 0 | Not authorized for this CAG or authorized for CAG cells only |
| 0 | 1 | 0 | | 1 | 1 | | 1 | Wireline access area not allowed |
| 0 | 1 | 0 | 0 1 | 1 | 0 | 0 1 | 0 | Payload was not forwarded |
| 0 | 1 | 0 | 1 | 1 | 0 | 1 | 1 | DNN not supported or not subscribed in the slice |
| 0 | 1 | 0 | 1 | 1 | 1 | 0 | 0 | Insufficient user-plane resources for the PDU session |
| 0 | 1 | 0 | 1 | 1 | 1 | 1 | 1 | Semantically incorrect message |
| 0 | 1 | 1 | 0 | 0 | 0 | 0 | 0 | Invalid mandatory information |
| 0 | 1 | 1 | 0 | 0 | 0 | 0 | 1 | Message type non-existent or not implemented |
| 0 | 1 | 1 | 0 | 0 | 0 | 1 | 0 | Message type not compatible with the protocol state |
| 0 | 1 | 1 | 0 | 0 | 0 | 1 | 1 | Information element non-existent or not implemented |
| 0 | 1 | 1 | 0 | 0 | 1 | 0 | 0 | Conditional IE error |
| 0 | 1 | 1 | 0 | 0 | 1 | 0 | 1 | Message not compatible with the protocol state |

| **x** | **x** | **x** | **x** | **x** | **x** | **x** | **x** | **Disaster Condition** |
|---|---|---|---|---|---|---|---|---|
| 0 | 1 | 1 | 0 | 1 | 1 | 1 | 1 | Protocol error, unspecified |
| Any other value received by the mobile station shall be treated as 0110 1111, "protocol error, unspecified". Any other value received by the network shall be treated as 0110 1111, "protocol error, unspecified". | | | | | | | | |

The network node 100 in this disclosure includes but is not limited to: a NodeB in wideband code division multiple access (WCDMA) system, an evolutional Node B (eNB) or an evolved NodeB (eNodeB) in LTE systems, or a relay node or an access point, or an in-vehicle device, a wearable device, or a gNB in the fifth generation (5G) networks.

Further, the network node 100 herein may be denoted as a radio network access node, an access network access node, an access point, or a base station, e.g. a radio base station (RBS), which in some networks may be referred to as transmitter, "gNB", "gNodeB", "eNB", "eNodeB", "NodeB" or "B node", depending on the technology and terminology used. The radio network access nodes may be of different classes such as e.g. macro eNodeB, home eNodeB or pico base station, based on transmission power and thereby also cell size. The radio network access node can be a station (STA), which is any device that contains an IEEE 802.11-conformant MAC and PHY interface to the wireless medium. The radio network access node may also be a base station corresponding to the 5G wireless systems.

However, the network node 100 may also be a node of a core network. The network node 100 may e.g. be AMF as previously mentioned but may also be a Session Management Function (SMF) or a Policy Control Function (PCF).

The client device 300 in this disclosure includes but is not limited to: a UE such as a smart phone, a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, an in-vehicle device, a wearable device, an integrated access and backhaul node (IAB) such as mobile car or equipment installed in a car, a drone, a device-to-device (D2D) device, a wireless camera, a mobile station, an access terminal, an user unit, a wireless communication device, a station of wireless local access network (WLAN), a wireless enabled tablet computer, a laptop-embedded equipment, an universal serial bus (USB) dongle, a wireless customer-premises equipment (CPE), and/or a chipset. In an Internet of things (IOT) scenario, the client device 300 may represent a machine or another device or chipset which performs communication with another wireless device and/or a network equipment.

The UE may further be referred to as a mobile telephone, a cellular telephone, a computer tablet or laptop with wireless capability. The UE in this context may e.g. be portable, pocket-storable, hand-held, computer-comprised, or vehicle-mounted mobile device, enabled to communicate voice and/or data, via the radio access network, with another entity, such as another receiver or a server. The UE can be a station (STA), which is any device that contains an IEEE 802.11-conformant media access control (MAC) and physical layer (PHY) interface to the wireless medium (WM). The UE may also be configured for communication in 3GPP related LTE and LTE-Advanced, in WiMAX and its evolution, and in fifth generation wireless technologies, such as NR.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the network node 100 and the client device 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the network node 100 and the client device 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A network node (100) for a communication system (500), the network node (100) being associated with a serving Public Land Mobile Network, PLMN, (610) for a first client device (300), and wherein the network node (100) is configured to:
transmit a first control message (510) to the first client device (300) upon determining that the serving PLMN (610) for the first client device (300) is in a disaster condition, wherein the first control message (510) indicates that the serving PLMN (610) for the first client device (300) is in the disaster condition,
wherein the network node (100) is an Access and Mobility management Function, AMF, of a core network, and wherein the first control message (510) is a registration reject message, a de-registration request message, a configuration update command message, or a service reject message.

2. A client device (300) for a communication system (500), the client device (300) being configured to be served by a serving PLMN (610), and further configured to
receive a first control message (510) from a first network node (100) associated with the serving PLMN (610) for the client device (300), wherein the first control message (510) indicates that the serving PLMN (610) is in the disaster condition, wherein the first network node (100) is an AMF of a core network, and wherein the first control message (510) is a registration reject message, a de-registration request message, a configuration update command message, or a service reject message.

3. The client device (300) according to claim 2, further configured to
obtain a PLMN list comprising one or more visiting PLMNs (620a, 620b,..., 620n); and
register at a visiting PLMN in the PLMN list upon receiving the first control message (510).

4. The client device (300) according to claim 3, wherein the first control message (510) further indicates at least one timer (T) defining a start register time instance at the visiting PLMN (620) for the client device (300) and/or a re-registration time instance at the serving PLMN (610) for the client device (300).

5. The client device (300) according to claim 2, further configured to:
receive a second control message (520) from a second network node (100') associated with a visiting PLMN (620) for the client device (300), wherein the second control message (520) indicates that the serving PLMN (610) is in the disaster condition.

6. The client device (300) according to claim 5, further configured to
obtain a PLMN list comprising one or more visiting PLMNs (620a, 620b,..., 620n); and
register at a visiting PLMN in the PLMN list upon receiving the first control message (510) or the second control message (520).

7. The client device (300) according to claim 6, wherein the first control message (510) and/or the second control message (520) further indicates at least one timer (T) defining a start register time instance at the visiting PLMN (620) for the client device (300) and/or a re-registration time instance at the serving PLMN (610) for the client device (300).

8. The client device (300) according to any one of claims 5 to 7, wherein the second network node (100') is a network access node of a RAN, and wherein the second control message (520) is a SIB.

9. The client device (300) according to any one of claims 2 to 8, further configured to
receive a third control message (530) from a second network node (100') associated with a visiting PLMN (620) for the client device (300), wherein the third control message (530) indicates that the disaster condition for the serving PLMN (610) for the client device (300) is over.

10. A method (200) for a network node (100) being associated with a serving PLMN (610) for a first client device (300), the method (200) comprising:
transmitting (202) a first control message (510) to the first client device (300) upon determining that the serving PLMN (610) for the first client device (300) is in a disaster condition, wherein the first control message (510) indicates that the serving PLMN (610) for the first client device (300) is in the disaster condition,
wherein the network node (100) is an Access and Mobility management Function, AMF, of a core network, and wherein the first control message (510) is a registration reject message, a de-registration request message, a configuration update command message, or a service reject message.

11. A method (400) for a client device (300) being configured to be served by a serving PLMN (610), the method (400) comprising:
receiving (402) a first control message (510) from a first network node (100) associated with the serving PLMN (610) for the client device (300), wherein the first control message (510) indicates that the serving PLMN (610) is in the disaster condition,
wherein the first network node (100) is an Access and Mobility management Function, AMF, of a core network, and wherein the first control message (510) is a registration reject message, a de-registration request message, a configuration update command message, or a service reject message.

12. The method (400) of claim 11, further comprising:
receiving (404) a second control message (520) from a second network node (100') associated with a visiting PLMN (620) for the client device (300), wherein the second control message (520) indicates that the serving PLMN (610) is in the disaster condition.

13. A computer program comprising a program code for performing a method according to claims 10 to 12 when the computer program runs on a computer.

## Patentansprüche

1. Netzwerkknoten (100) für ein Kommunikationssystem (500), wobei der Netzwerkknoten (100) mit einem bedienenden "Public Land Mobile Network" bzw. PLMN (610) für eine erste Client-Vorrichtung (300) assoziiert ist und wobei der Netzwerkknoten (100) zu Folgendem ausgelegt ist:
Übertragen einer ersten Steuernachricht (510) an die erste Client-Vorrichtung (300), nachdem bestimmt wird, dass sich das bedienende PLMN (610) für die erste Client-Vorrichtung (300) in einer Katastrophenbedingung befindet, wobei die erste Steuernachricht (510) angibt, dass sich das bedienende PLMN (610) für die erste Client-Vorrichtung (300) in der Katastrophenbedingung befindet,
wobei der Netzwerkknoten (100) eine Zugangs- und Mobilitätsverwaltungsfunktion bzw. AMF eines Kernnetzwerks ist und wobei die erste Steuernachricht (510) eine Registrierungsablehnungsnachricht, eine Abmeldungsanforderungsnachricht, eine Konfigurationsaktualisierungsbefehlsnachricht oder eine Dienstablehnungsnachricht ist.

2. Client-Vorrichtung (300) für ein Kommunikationssystem (500), wobei die Client-Vorrichtung (300) dazu ausgelegt ist, durch ein bedienendes PLMN (610) bedient zu werden, und ferner zu Folgendem ausgelegt ist:
Empfangen einer ersten Steuernachricht (510) von einem ersten Netzwerkknoten (100), der mit dem bedienenden PLMN (610) für die Client-Vorrichtung (300) assoziiert ist, wobei die erste Steuernachricht (510) angibt, dass sich das bedienende PLMN (610) in der Katastrophenbedingung befindet, wobei der erste Netzwerkknoten (100) eine AMF eines Kernnetzwerks ist und wobei die erste Steuernachricht (510) eine Registrierungsablehnungsnachricht, eine Abmeldungsanforderungsnachricht, eine Konfigurationsaktualisierungsbefehlsnachricht oder eine Dienstablehnungsnachricht ist.

3. Client-Vorrichtung (300) nach Anspruch 2, die ferner zu Folgendem ausgelegt ist:
Erhalten einer PLMN-Liste, die ein oder mehrere Besuchs-PLMNs (620a, 620b, ..., 620n) umfasst; und
Registrieren bei einem Besuchs-PLMN in der PLMN-Liste bei Empfang der ersten Steuernachricht (510).

4. Client-Vorrichtung (300) nach Anspruch 3, wobei die erste Steuernachricht (510) ferner mindestens einen Timer (T) angibt, der einen Startregistrierungszeitpunkt bei dem Besuchs-PLMN (620) für die Client-Vorrichtung (300) und/oder einen Abmeldungszeitpunkt bei dem bedienenden PLMN (610) für die Client-Vorrichtung (300) definiert.

5. Client-Vorrichtung (300) nach Anspruch 2, die ferner zu Folgendem ausgelegt ist:
Empfangen einer zweiten Steuernachricht (520) von einem zweiten Netzwerkknoten (100'), der mit einem Besuchs-PLMN (620) für die Client-Vorrichtung (300) assoziiert ist, wobei die zweite Steuernachricht (520) angibt, dass sich das bedienende PLMN (610) in der Katastrophenbedingung befindet.

6. Client-Vorrichtung (300) nach Anspruch 5, die ferner zu Folgendem ausgelegt ist:
Erhalten einer PLMN-Liste, die ein oder mehrere Besuchs-PLMNs (620a, 620b, ..., 620n) umfasst; und
Registrieren bei einem Besuchs-PLMN in der PLMN-Liste bei Empfang der ersten Steuernachricht (510) oder der zweiten Steuernachricht (520).

7. Client-Vorrichtung (300) nach Anspruch 6, wobei die erste Steuernachricht (510) und/oder die zweite Steuernachricht (520) ferner mindestens einen Timer (T) angibt, der einen Startregistrierungszeitpunkt bei dem Besuchs-PLMN (620) für die Client-Vorrichtung (300) und/oder einen Abmeldungszeitpunkt bei dem bedienenden PLMN (610) für die Client-Vorrichtung (300) definiert.

8. Client-Vorrichtung (300) nach einem der Ansprüche 5 bis 7, wobei der zweite Netzwerkknoten (100') ein Netzwerkzugangsknoten eines RAN ist und wobei die zweite Steuernachricht (520) ein SIB ist.

9. Client-Vorrichtung (300) nach einem der Ansprüche 2 bis 8, die ferner zu Folgendem ausgelegt ist:
Empfangen einer dritten Steuernachricht (530) von einem zweiten Netzwerkknoten (100'), der mit einem Besuchs-PLMN (620) für die Client-Vorrichtung (300) assoziiert ist, wobei die dritte Steuernachricht (530) angibt, dass die Katastrophenbedingung für das bedienende PLMN (610) für die Client-Vorrichtung (300) beendet ist.

10. Verfahren (200) für einen Netzwerkknoten (100), der mit einem bedienenden PLMN (610) für eine erste Client-Vorrichtung (300) assoziiert ist, wobei das Verfahren (200) Folgendes umfasst:
Übertragen (202) einer ersten Steuernachricht (510) an die erste Client-Vorrichtung (300), nachdem bestimmt wird, dass sich das bedienende PLMN (610) für die erste Client-Vorrichtung (300) in einer Katastrophenbedingung befindet, wobei die erste Steuernachricht (510) angibt, dass sich das bedienende PLMN (610) für die erste Client-Vorrichtung (300) in der Katastrophenbedingung befindet,
wobei der Netzwerkknoten (100) eine Zugangs- und Mobilitätsverwaltungsfunktion bzw. AMF eines Kernnetzwerks ist und wobei die erste Steuernachricht (510) eine Registrierungsablehnungsnachricht, eine Abmeldungsanforderungsnachricht, eine Konfigurationsaktualisierungsbefehlsnachricht oder eine Dienstablehnungsnachricht ist.

11. Verfahren (400) für eine Client-Vorrichtung (300), die dazu ausgelegt ist, durch ein bedienendes PLMN (610) bedient zu werden, wobei das Verfahren (400) Folgendes umfasst:
Empfangen (402) einer ersten Steuernachricht (510) von einem ersten Netzwerkknoten (100), der mit dem bedienenden PLMN (610) für die Client-Vorrichtung (300) assoziiert ist, wobei die erste Steuernachricht (510) angibt, dass sich das bedienende PLMN (610) in der Katastrophenbedingung befindet,
wobei der erste Netzwerkknoten (100) eine Zugangs- und Mobilitätsverwaltungsfunktion bzw. AMF eines Kernnetzwerks ist und wobei die erste Steuernachricht (510) eine Registrierungsablehnungsnachricht, eine Abmeldungsanforderungsnachricht, eine Konfigurationsaktualisierungsbefehlsnachricht oder eine Dienstablehnungsnachricht ist.

12. Verfahren (400) nach Anspruch 11, das ferner Folgendes umfasst:
Empfangen (404) einer zweiten Steuernachricht (520) von einem zweiten Netzwerkknoten (100'), der mit einem Besuchs-PLMN (620) für die Client-Vorrichtung (300) assoziiert ist, wobei die zweite Steuernachricht (520) angibt, dass sich das bedienende PLMN (610) in der Katastrophenbedingung befindet.

13. Computerprogramm, umfassend einen Programmcode zum Durchführen eines Verfahrens nach einem der Ansprüche 10 bis 12 bei Ausführung des Computerprogramms auf einem Computer.

## Revendications

1. Nœud de réseau (100) pour un système de communication (500), le nœud de réseau (100) étant associé à un réseau public terrestre mobile, PLMN, de desserte (610) pour un premier dispositif client (300), et le nœud de réseau (100) étant configuré pour :
transmettre un premier message de commande (510) au premier dispositif client (300) lors de la détermination que le PLMN de desserte (610) pour le premier dispositif client (300) est dans une condition de catastrophe, le premier message de commande (510) indiquant que le PLMN de desserte (610) pour le premier dispositif client (300) est dans la condition de catastrophe,
le nœud de réseau (100) étant une fonction de gestion d'accès et de mobilité, AMF, d'un réseau central, et le premier message de commande (510) étant un message de rejet d'enregistrement, un message de demande de désenregistrement, un message de commande de mise à jour de configuration ou un message de rejet de service.

2. Dispositif client (300) pour un système de communication (500), le dispositif client (300) étant configuré pour être desservi par un PLMN de desserte (610), et configuré en outre pour
recevoir un premier message de commande (510) en provenance d'un premier nœud de réseau (100) associé au PLMN de desserte (610) pour le dispositif client (300), le premier message de commande (510) indiquant que le PLMN de desserte (610) est dans la condition de catastrophe, le premier nœud de réseau (100) étant un AMF d'un réseau central, et le premier message de commande (510) étant un message de rejet d'enregistrement, un message de demande de désenregistrement, un message de commande de mise à jour de configuration, ou un message de rejet de service.

3. Dispositif client (300) selon la revendication 2, configuré en outre pour obtenir une liste de PLMN comprenant un ou plusieurs PLMN visiteurs (620a, 620b,..., 620n) ; et
s'enregistrer auprès d'un PLMN visiteur dans la liste PLMN lors de la réception du premier message de commande (510).

4. Dispositif client (300) selon la revendication 3, le premier message de commande (510) indiquant en outre au moins un temporisateur (T) définissant une instance de temps de début d'enregistrement au PLMN visiteur (620) pour le dispositif client (300) et/ou une instance de temps de réenregistrement au PLMN de desserte (610) pour le dispositif client (300).

5. Dispositif client (300) selon la revendication 2, configuré en outre pour :
recevoir un deuxième message de commande (520) en provenance d'un deuxième nœud de réseau (100') associé à un PLMN visiteur (620) pour le dispositif client (300), le deuxième message de commande (520) indiquant que le PLMN de desserte (610) est dans la condition de catastrophe.

6. Dispositif client (300) selon la revendication 5, configuré en outre pour obtenir une liste de PLMN comprenant un ou plusieurs PLMN visiteurs (620a, 620b,..., 620n) ; et
s'enregistrer auprès d'un PLMN visiteur dans la liste PLMN lors de la réception du premier message de commande (510) ou du deuxième message de commande (520).

7. Dispositif client (300) selon la revendication 6, le premier message de commande (510) et/ou le deuxième message de commande (520) indiquant en outre au moins un temporisateur (T) définissant une instance de temps de début d'enregistrement au PLMN visiteur (620) pour le dispositif client (300) et/ou une instance de temps de réenregistrement au PLMN de desserte (610) pour le dispositif client (300).

8. Dispositif client (300) selon l'une quelconque des revendications 5 à 7, le deuxième nœud de réseau (100') étant un nœud d'accès au réseau d'un RAN, et le deuxième message de commande (520) étant un SIB.

9. Dispositif client (300) selon l'une quelconque des revendications 2 à 8, configuré en outre pour
recevoir un troisième message de commande (530) en provenance d'un deuxième nœud de réseau (100') associé à un PLMN visiteur (620) pour le dispositif client (300), le troisième message de commande (530) indiquant que la condition de catastrophe pour le PLMN de desserte (610) pour le dispositif client (300) est terminée.

10. Procédé (200) pour un nœud de réseau (100) qui est associé à un PLMN de desserte (610) pour un premier dispositif client (300), le procédé (200) comprenant :
la transmission (202) d'un premier message de commande (510) au premier dispositif client (300) lors de la détermination que le PLMN de desserte (610) pour le premier dispositif client (300) est dans une condition de catastrophe, le premier message de commande (510) indiquant que le PLMN de desserte (610) pour le premier dispositif client (300) est dans la condition de catastrophe,
le nœud de réseau (100) étant une fonction de gestion d'accès et de mobilité, AMF, d'un réseau central, et le premier message de commande (510) étant un message de rejet d'enregistrement, un message de demande de désenregistrement, un message de commande de mise à jour de configuration ou un message de rejet de service.

11. Procédé (400) pour un dispositif client (300) qui est configuré pour être desservi par un PLMN de desserte (610), le procédé (400) comprenant :
la réception (402) d'un premier message de commande (510) en provenance d'un premier nœud de réseau (100) associé au PLMN de desserte (610) pour le dispositif client (300), le premier message de commande (510) indiquant que le PLMN de desserte (610) est dans la condition de catastrophe,
le premier nœud de réseau (100) étant une fonction de gestion d'accès et de mobilité, AMF, d'un réseau central, et le premier message de commande (510) étant un message de rejet d'enregistrement, un message de demande de désenregistrement, un message de commande de mise à jour de configuration ou un message de rejet de service.

12. Procédé (400) selon la revendication 11, comprenant en outre :
la réception (404) d'un deuxième message de commande (520) en provenance d'un deuxième nœud de réseau (100') associé à un PLMN visiteur (620) pour le dispositif client (300), le deuxième message de commande (520) indiquant que le PLMN de desserte (610) est dans la condition de catastrophe.

13. Programme informatique comprenant un code de programme pour la réalisation d'un procédé selon les revendications 10 à 12 lorsque le programme informatique s'exécute sur un ordinateur.
